# EUROPÄISCHE PATENTSCHRIFT

(11) **EP 4 075 076 B1**
(45) Veröffentlichungstag und Bekanntmachung des Hinweises auf die Patenterteilung: **28.10.2026**
(21) Anmeldenummer: 22167972.3
(22) Anmeldetag: 12.04.2022
(51) Int. Cl.: F24S 10/70, F24S 20/66, E04F 13/14, E04F 13/08

(54) **FASSADENPLATTE MIT WÄRMETAUSCHER-NUT**
FACADE PANEL WITH HEAT EXCHANGER GROOVE
PANNEAU DE FAÇADE COMPRENANT UNE RAINURE POUR ÉCHANGEUR THERMIQUE

(30) Priorität: 12.04.2021 DE 202021101965 U
(43) Veröffentlichungstag der Anmeldung: 19.10.2022
(73) Patentinhaber: ABC Keramik H & R Berentelg GmbH & Co. KG, 49509 Recke (DE)
(72) Erfinder: Lanfervoß, Markus, 48565 Steinurt (DE)
(74) Vertreter: Patentanwälte Olbricht Buchhold Keulertz

(56) Entgegenhaltungen:
- EP-A1- 0 111 763
- EP-A1- 3 683 379
- EP-A1- 3 760 934
- EP-A2- 1 980 679
- EP-B1- 3 181 773
- DE-A1- 10 049 172
- DE-A1- 102007 011 087
- DE-A1- 2 911 552
- DE-U1- 29 911 861
- US-A1- 2016 115 691

## Beschreibung

Die Erfindung betrifft eine Fassadenplatte aus einem mineralischen Werkstoff.

Aus der Praxis sind mineralische Mauerwerksteine bekannt, die durch Mörtel miteinander verbunden eine äußere Verkleidung für ein tragendes Mauerwerk bilden können. Dabei ist es bekannt, in die Oberseite der Mauerwerksteine Nuten einzubringen, in welche eine Wärmeträger-Leitung eingelegt werden kann, die dann in die Mörtelschicht eingebettet bzw. von dem Mörtel umhüllt wird. Bei Erwärmung des Mauerwerks kann auf diese Weise Wärmeenergie an ein Wärmeträgerfluid übertragen werden.

Aus der DE 299 11 861 U1, der DE 100 49 172 A1, EP 0 111 763 A1, EP 3 760 934 A1 und der US 2016/0115691 A1 sind jeweils Heizungs-Elemente bekannt, die zur Schaffung einer Fußboden- oder Wandheizung als Platten aus mineralischen Werkstoffen ausgestaltet sind und Nuten aufweisen, in denen von einem Heizungsfluid durchströmte Leitungen angeordnet sind. Aus der DE 29 11 552 A1 ist ein Latentwärmespeicherstein bekannt, bei dem die Leitungen in röhrenförmigen Durchgängen verlaufen, welche in einem einzigen, einteiligen Latentwärmespeicherstein, durch zwei Hälften eines Latentwärmespeichersteins oder in einem Aufbau aus mehreren Latentwärmespeichersteinen gebildet sind.

Weiterhin sind aus der EP 3 683 379 A1 Fassadenplatten bekannt, die aus einem mineralischen Werkstoff bestehen und als vorgehängte Fassade an einer Traglattung montiert werden.

Aus der DE 10 2007 011 087 A1, die den nächstliegenden Stand der Technik bildet, ist ein Paneel zum Verkleiden einer Fläche bekannt, das als Heizungs-Element genutzt werden kann, aber beispielsweise auch in einer Solarkollektorfläche eingesetzt werden kann und damit eine Fassadenplatte darstellt. Die Fassadenplatte besteht aus einem wärmeleitenden Material, insbesondere aus Aluminium oder einer Aluminiumlegierung, aber auch spezielle Kunststoffe kommen in Frage.

Der Erfindung liegt die Aufgabe zugrunde, eine Fassadenplatte anzugeben, die eine Gewinnung von Wärmeenergie ermöglicht.

Diese Aufgabe wird durch eine Fassadenplatte mit den Merkmalen des Anspruchs 1 gelöst. Vorteilhafte Ausgestaltungen sind in den Unteransprüchen beschrieben.

Die Erfindung schlägt mit anderen Worten vor, die Fassadenplatte aus einem keramischen Werkstoff herzustellen, und zwar als Klinker. Klinker weist den Vorteil einer sehr geringen Wasseraufnahme auf, so dass auf die Fassade auftreffende Sonnenlichteinstrahlung mit einem guten Wirkungsgrad dazu genutzt werden kann, die Fassadenplatte zu erwärmen und dabei Wärmeverluste durch verdunstende Wasseranteile möglichst gering zu halten. Zudem weist Klinker durch seine dichte Materialstruktur und sein vergleichsweise hohes spezifisches Gewicht gute Voraussetzungen auf, um eingestrahlte Sonnenenergie zu speichern.

Die Fassadenplatten sind üblicherweise dazu bestimmt, in einer einzigen vorgesehenen Ausrichtung montiert zu werden. Im Rahmen des vorliegenden Vorschlags ist daher von einer nach außen gerichteten Vorderseite, einer zum Gebäude gerichteten Rückseite, von Ober- und Unterkanten sowie von zwei Seitenkanten die Rede, ausgehend von einer in der Praxis am weitesten verbreiteten, rechteckigen Ausgestaltung der Fassadenplatte. Andere Formgebungen der Fassadenplatte sind allerdings im vorliegenden Vorschlag mit eingeschlossen, wobei die Fassadenplatten stets eine Vorder- und eine Rückseite aufweisen, die Begriffe wie Ober-, Unter- und Seitenkanten in solchen Fällen allerdings nur dazu dienen sollen, die grundsätzliche Ausrichtung der nicht-rechteckigen Fassadenplatte zu verdeutlichen.

Vorschlagsgemäß weist die Fassadenplatte einen Nut auf, die an der Rückseite der Fassadenplatte verläuft und dazu bestimmt ist, eine Wärmeträgerleitung aufzunehmen, beispielsweise ein von Wasser durchströmtes Kunststoffrohr, so dass über den Wärmeträger, z.B. Wasser, die in der Fassadenplatte gespeicherte Wärme abgeführt und auf diese Weise aus der Fassade Wärmeenergie gewonnen werden kann.

Die Nut ist von der Rückseite her offen, so dass einerseits die Wärmeträgerleitung bei der Errichtung der Fassade von der Rückseite her in die Nut eingelegt werden kann, bevor die Fassadenplatte montiert wird. Dadurch, dass die Wärmeträgerleitung auf diese Weise an einer grundsätzlich zugänglichen Stelle der Fassadenplatte montiert wird und nicht vollständig umhüllt wird, wie z.B. durch eine Mörtelschicht oder wenn die Wärmeträgerleitung in einer ringsum geschlossenen Bohrung geführt würde, ist eine spätere Revision möglich. Eine beschädigte Fassadenplatte kann ausgewechselt werden, ohne die Wärmeträger-leitung unterbrechen oder zerstören zu müssen.

Vorteilhaft kann die Nut in einer Wulst verlaufen, also in einem Bereich, in welchem die Fassadenplatte eine vergrößerte Wandstärke aufweist. Durch die größere Materialkonzentration im Bereich der Wulst wird erstens ein besonders intensiver Wärmeeintrag in die Wärmeträgerleitung unterstützt. Zweitens kann auf diese Weise vermieden werden, die grundsätzliche Materialstärke der Fassadenplatte durch die Nut zu schwächen, so dass die mechanische Robustheit der Fassadenplatte nicht beeinträchtigt ist.

Vorteilhaft kann die Nut einen teilkreisförmigen Querschnitt aufweisen. Auf diese Weise können handelsübliche Rohrleitungen, die in den meisten Fällen einen kreisrunden Querschnitt aufweisen, verwendet und als Wärmeträgerleitung genutzt werden, und dabei wird eine enge Anlage der Wärmeträgerleitung am Nutrand gewährleistet, so dass eine gute Wärmeübertragung von der Fassadenplatte auf die Wärmeträgerleitung erzielt werden kann.

Vorteilhaft kann der teilkreisförmige Querschnitt einen Winkel von mehr als 180° einschließen, so dass die Wärmeträgerleitung über ihren Äquator hinaus von der Nut umfasst wird. Hierdurch wird in Art einer Verrastung ein sicherer Halt der Wärmeträgerleitung in der Nut erreicht, ohne die Verwendung zusätzlicher Befestigungselemente in Form einzelner Bauteile, und auch ohne die Verwendung zusätzlicher pastöser oder fließfähiger Befestigungsmittel. Diese Art des Klemmsitzes bzw. der Verrastung der Wärmeträgerleitung unterstützt die oben erwähnte Revisionsmöglichkeit. Weiterhin schafft ein teilkreisförmiger Querschnitt von mehr als 180° eine möglichst große Wärmeübertragungsfläche, so dass eine möglichst intensive Wärmeübertragung von der Fassadenplatte auf die Wärmeträgerleitung unterstützt wird.

Um die Wärmeübertragung vom Nutrand auf die Wärmeträgerleitung zu verbessern, kann ein Wärmeleitmaterial verwendet werden, welches beispielsweise als pastöse oder gelartige Masse in die Nut eingebracht wird, bevor die Wärmeträgerleitung in die Nut eingelegt bzw. eingeclipst wird. Das Wärmeleitmaterial dient dazu, einen ansonsten sich ggf. ergebenden Luftspalt zu überbrücken und die Wärmeübertragung von der Fassadentafel auf die Wärmeträgerleitung zu verbessern. Das Wärmeleitmaterial dient jedoch nicht dazu, die Wärmeträgerleitung in der Nut zu befestigen, es verbindet sich also vorzugsweise weder mit dem Material der Fassadenplatte noch mit dem Material der Wärmeträgerleitung. Weiterhin kann das Wärmeleitmaterial nicht aushärtend, sondern vielmehr dauerelastisch oder dauerhaft pastös bzw. gelartig ausgestaltet sein, so dass im Revisionsfall die Fassadenplatte problemlos von der Wärmeträgerleitung entfernt werden kann.

Grundsätzlich kann vorgesehen sein, jede Fassadenplatte mit einer eigenen Wärmeträgerleitung zu bestücken. In diesem Fall könnte die Wärmeträgerleitung einen beliebigen Verlauf auf der Rückseite der Fassadenplatte nehmen und an den beiden Seitenkanten der Fassadenplatte in unterschiedlicher Höhe münden. Übergangsstücke, die ohnehin zur Verbindung zwischen den beiden benachbarten Wärmeträgerleitungen zweier benachbarter Fassadenplatte erforderlich wären, könnten gleichzeitig dazu dienen, einen entsprechenden Höhenversatz auszugleichen. Vorteilhaft jedoch kann vorgesehen sein, dass die Nut an beiden Seitenkanten der Fassadenplatte auf gleicher Höhe mündet. Auf diese Weise werden nicht nur spezielle Übergangsstücke erübrigt, sondern es können überhaupt Verbindungsstücke zwischen benachbarten Fassadenplatten entfallen und die Wärmeträgerleitung kann sich über mehrere Fassadenplatten hinweg erstrecken, beispielsweise über die gesamte Breite der Fassade.

Dabei kann grundsätzlich vorgesehen sein, dass die Nut beispielsweise serpentinenförmig oder mäanderförmig verlaufen kann, um eine besonders lange Strecke auf der Rückseite der Fassadenplatte zu schaffen, die zur Wärmeübertragung genutzt werden kann. Abweichend davon kann jedoch vorteilhaft vorgesehen sein, dass die Nut geradlinig zwischen den beiden höhengleichen Mündungen verläuft. Dies unterstützt eine in der Praxis bewährte und preisgünstige Art der Herstellung der Fassadenplatte, die in Art eines Strangpressverfahrens hergestellt wird. Weiterhin kann auf diese Weise gewährleistet werden, indem nämlich beispielsweise die Nut randnah verläuft, dass die Wärmeträgerleitung in einem Revisionsfall gut zugänglich ist und aus der Nut gelöst werden kann.

Dabei kann vorteilhaft vorgesehen sein, dass die Nut nahe der Unterkante der Fassadenplatte verläuft. Auf diese Weise kann die Befestigung der Fassadenplatte unverändert, wie dies aus der Praxis bekannt und üblich ist, nahe der Oberkante der Fassadenplatte erfolgen, so dass sie Fassadenplatte im Bereich ihrer Oberkante unverändert ausgestaltet werden kann. Die Befestigungsstellen nahe der Oberkante werden in der Praxis üblicherweise dadurch verdeckt, dass übereinander angeordnete Fassadenplatten sich dachschindelartig überlappen, so dass die Unterkante der oberen Fassadenplatte den Befestigungsbereich der darunter befindlichen Fassadenplatte verdeckt. Für die Wärmeträgerleitung bedeutet eine solche Anordnung der Fassadenplatten zudem vorteilhaft, dass die Wärmeträgerleitung auch mit dem Umfangsabschnitt, der nicht in dem Nutrand anliegt, dem Material einer Fassadenplatte benachbart ist, nämlich dem oberen Bereich der nächst unteren Fassadenplatte. Die guten Wärmeleiteigenschaften des Klinkermaterials bewirken, dass der obere Bereich einer Fassadenplatte, der von der jeweils darüber befindlichen Fassadenplatte verdeckt wird, ebenfalls erwärmt wird, auch wenn er nicht direkt der Sonnenstrahlung ausgesetzt ist.

Vorteilhaft können Bohrungen die Fassadenplatte nahe ihrer Oberkante durchsetzen, so dass die Fassadenplatte in an sich bekannter Weise montiert werden kann. Beispielsweise kann sie an eine Traglattung angeschraubt oder genagelt werden, wobei die Bohrungen sich von der Vorderseite zur Rückseite der Fassadenplatte erstrecken und dazu dienen, die Schrauben oder Nägel aufzunehmen und zu führen.

Die Querschnittsform der Fassadenplatte kann annähernd L- oder U-förmig in der Art ausgestaltet sein, dass die Fassadenplatte einerseits einen plattenförmigen Hauptkörper aufweist und andererseits eine Randleiste an ihrer Oberkante und / oder ihrer Unterkante aufweist. Die Randleiste erstreckt sich von der Vorderseite der Fassadenplatte nach hinten, verläuft also entlang der Rückseite der Fassadenplatte. Eine obere Randleiste kann dazu dienen, die Fassadenplatte an eine Traglattung zu hängen, so dass das Gewicht der Fassadenplatte nicht durch die erwähnten Schrauben oder Nägel getragen werden muss, sondern diese lediglich zur Lagefixierung der Fassadenplatte dienen. Eine untere Randleiste kann angesichts der erwähnten dachschindelartigten Montage der Fassadenplatten dazu dienen, der sichtbaren Unterkante die Anmutung einer besonders großen Materialstärke der Fassadenplatte zu verleihen. Zudem verstärkt die untere Randleiste die Fassadenplatte dort, wo sie der darunter befindlichen Fassadenplatte anliegt, so dass diese mechanische Verstärkung zur Vermeidung optischer und funktionaler Beeinträchtigungen oder Beschädigungen beiträgt.

Falls die Fassadenplatte eine untere Randleiste aufweist, kann die Nut vorteilhaft in dem Winkel verlaufen, wo diese untere Randleiste an den Hauptkörper der Fassadenplatte anschließt. Einerseits wird so eine Ausgestaltung der Nut vereinfacht, die einen teilkreisförmigen Querschnitt von 180° oder mehr aufweist. Zweitens wird in diesem Bereich eine vergleichsweise große Materialanhäufung bereitgestellt, die eine intensive Wärmeübertragung an die Wärmeträgerleitung ermöglicht. Drittens unterbricht die Nut allerdings diese Materialanhäufung, so dass für die Herstellung der Fassadenplatte unerwünscht lange Trocknungszeiten vermieden werden können, die ansonsten die Herstellung der Fassadenplatte technisch und wirtschaftlich negativ beeinflussen könnten.

Die eingangs erwähnte geringe Wasseraufnahme kann vorteilhaft in einem für Klinker typischen Bereich liegen und höchstens 6 Gewichts-% betragen. Besonders vorteilhaft kann in diesem Zusammenhang vorgesehen sein, dass Wasseraufnahmevermögen noch weiter zu begrenzen und ein Klinkermaterial zu verwenden, welches nach dem Brand ein Wasseraufnahmevermögen von höchstens 3 % aufweist.

Ein Ausführungsbeispiel der Erfindung wird anhand der rein schematischen Darstellung nachfolgend näher erläutert.

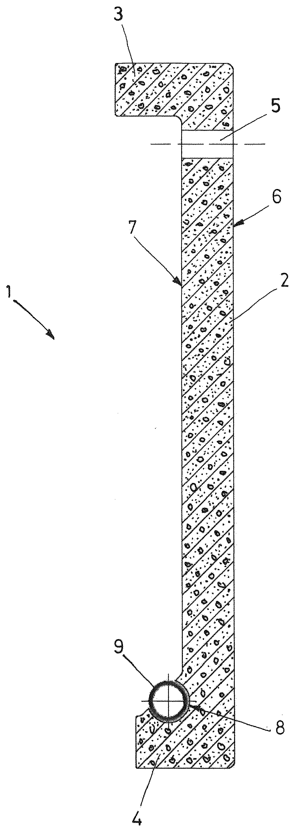

Dabei ist in der Zeichnung ein Querschnitt durch eine Fassadenplatte 1 dargestellt. Die Fassadenplatte 1 besteht aus einem Klinkermaterial, weist ein Wasseraufnahmevermögen von 3 % auf und ist zunächst als Rohling in einem Strangpressverfahren hergestellt und anschließend gebrannt worden. Sie weist einen annähernd U-förmigen Querschnitt auf, mit einem plattenförmigen Hauptkörper 2, einer oberen Randleiste 3 sowie einer unteren Randleiste 4.

Unterhalb der oberen Randleiste 3 befinden sich im oberen Bereich der Fassadenplatte 1 mehrere Bohrungen 5, welche den Hauptkörper 2 durchsetzen, von einer Vorderseite 6 zu einer Rückseite 7 der Fassadenplatte 1 verlaufen und als Bohr- oder Schraublöcher zur Befestigung der Fassadenplatte 1 an einer Tragkonstruktion dienen, z.B. an Traglatten.

In dem Übergangsbereich zwischen dem Hauptkörper 2 und der unteren Randleiste 4, also in dem Winkel, in dem die untere Randleiste 4 auf der Rückseite 7 an den Grundkörper 2 anschließt, verläuft eine Nut 8. Aufgrund des Herstellungsverfahrens der Fassadenplatte 1 verläuft die Nut 8 geradlinig zwischen ihren beiden höhengleichen Mündungen, die sich an den beiden gegenüberliegenden Seitenkanten der Fassadenplatte 1 befinden.

Die Nut 8 weist einen teilkreisförmigen Querschnitt auf, der einen Winkel von mehr als 180° einschließt. Auf diese Weise wird eine Wärmeträgerleitung 9, die als Kunststoffrohr mit einem kreisrunden Querschnitt ausgestaltet ist, in Art einer Rast- oder Clipsbefestigung in der Nut 8 gehalten. Dadurch, dass die Nut 8 zur Rückseite 7 der Fassadenplatte 1 hin offen ist, wird die Montage der Fassadentafel 1 an der Baustelle erleichtert. Beispielsweise kann zunächst die Wärmeträgerleitung 9 in der geeigneten Höhe über die gesamte Breite eine Hauswand provisorisch verlegt werden, beispielsweise gespannt werden. Anschließend werden nacheinander mehrere Fassadenplatten 1 nebeneinander montiert, und dabei wird jeweils die Wärmeträgerleitung 9 in die Nut 8 der betreffenden Fassadenplatte 1 eingeclipst. Ggf. kann die Nut 8 dadurch vorbehandelt sein, dass ein verformbares, z.B. pastöses oder gelartiges Wärmeleitmaterial zunächst in die Nut 8 eingebracht wird, bevor die Wärmeträgerleitung 9 in die Nut 8 gedrückt bzw. die Fassadenplatte 1 mit ihrer Nut 8 auf die Wärmeträgerleitung 9 aufgeclipst wird.

### Bezugszeichen:

- 1: Fassadenplatte
- 2: Grundkörper
- 3: Obere Randleiste
- 4: Untere Randleiste
- 5: Bohrung
- 6: Vorderseite
- 7: Rückseite
- 8: Nut
- 9: Wärmeträgerleitung

## Patentansprüche

1. Fassadenplatte (1),
mit einer Vorderseite (6), die in der Gebrauchsanordnung der Fassadenplatte (1) die von einem Gebäude abgewandte Außenseite der Gebäudefassade bildet,
einer Rückseite (7), die in der Gebrauchsanordnung der Fassadenplatte (1) die zum Gebäude gewandte Innenseite der Gebäudefassade bildet,
Kanten, die in der Gebrauchsanordnung der Fassadenplatte (1) eine Oberkante und eine Unterkante sowie zwei Seitenkanten bilden,
und mit einer Nut (8),
die an der Rückseite (7) der Fassadenplatte (1) von einer bis zur anderen Seitenkante verläuft,
von der Rückseite (7) her offen ist,
und zur Aufnahme einer Wärmeträgerleitung (9) bestimmt ist,
**dadurch gekennzeichnet,**
**dass** die Fassadenplatte (1) aus einem mineralischen Werkstoff besteht und als keramische Fassadenplatte (1) aus Klinker ausgestaltet ist.

2. Fassadenplatte nach Anspruch 1,
**dadurch gekennzeichnet,**
**dass** die Nut (8) in einer Wulst verläuft, in welcher die Fassadenplatte (1) einen Bereich mit vergrößerter Wandstärke bildet.

3. Fassadenplatte nach Anspruch 1 oder 2,
**dadurch gekennzeichnet,**
**dass** die Nut (8) einen teilkreisförmigen Querschnitt aufweist.

4. Fassadenplatte nach Anspruch 2,
**dadurch gekennzeichnet,**
**dass** der teilkreisförmige Querschnitt einen Winkel von mehr als 180° einschließt.

5. Fassadenplatte nach einem der vorhergehenden Ansprüche,
**dadurch gekennzeichnet,**
**dass** die Nut (8) an beiden Seitenkanten der Fassadenplatte (1) auf gleicher Höhe mündet.

6. Fassadenplatte nach Anspruch 5,
**dadurch gekennzeichnet,**
**dass** die Nut (8) geradlinig zwischen den beiden Mündungen verläuft.

7. Fassadenplatte nach einem der vorhergehenden Ansprüche,
**dadurch gekennzeichnet,**
**dass** die Nut (8) nahe der Unterkante der Fassadenplatte (1) verläuft.

8. Fassadenplatte nach einem der vorhergehenden Ansprüche,
**dadurch gekennzeichnet,**
**dass** die Fassadenplatte (1) nahe ihrer Oberkante von Bohrungen (5) durchsetzt ist, die sich von der Vorderseite (6) zur Rückseite (7) der Fassadenplatte (1) erstrecken.

9. Fassadenplatte nach einem der vorhergehenden Ansprüche,
**dadurch gekennzeichnet,**
**dass** die Fassadenplatte (1) einen plattenförmigen Hauptkörper (2) aufweist und entlang ihrer Oberkante und / oder ihrer Unterkante eine sich entlang der Rückseite erstreckende, an den Hauptkörper angeformte Randleiste (3, 4) aufweist.

10. Fassadenplatte nach Anspruch 9,
**dadurch gekennzeichnet,**
**dass** die Nut (8) in dem Winkel verläuft, wo eine untere Randleiste (4) an den Hauptkörper (2) anschließt.

11. Fassadenplatte nach einem der vorhergehenden Ansprüche,
**dadurch gekennzeichnet,**
**dass** die Fassadenplatte (1) ein Wasseraufnahmevermögen von höchstens 6% aufweist.

12. Fassadenplatte nach Anspruch 11,
**dadurch gekennzeichnet,**
**dass** die Fassadenplatte (1) ein Wasseraufnahmevermögen von höchstens 3% aufweist.

## Claims

1. Facade panel (1),
having a front side (6), which forms the outer side of the building facade facing away from a building when the facade panel (1) is in the use arrangement,
a rear side (7), which forms the inner side of the building facade facing towards the building when the facade panel (1) is in the use arrangement,
edges, which form an upper edge and a lower edge as well as two side edges when the facade panel (1) is in the use arrangement,
and having a groove (8),
which runs from one side edge to the other on the rear side (7) of the facade panel (1),
is open from the rear side (7),
and is intended to receive a heat transfer line (9), **characterized**
**in that** the facade panel (1) consists of a mineral material and is designed as a ceramic facade panel (1) made of clinker.

2. Facade panel according to Claim 1,
**characterized**
**in that** the groove (8) runs in a bead in which the facade panel (1) forms a region with increased wall thickness.

3. Facade panel according to Claim 1 or 2,
**characterized**
**in that** the groove (8) has a partially circular cross section.

4. Facade panel according to Claim 2,
**characterized**
**in that** the partially circular cross section subtends an angle of more than 180°.

5. Facade panel according to any of the preceding claims,
**characterized**
**in that** the groove (8) opens out at the same height on both side edges of the facade panel (1).

6. Facade panel according to Claim 5,
**characterized**
**in that** the groove (8) runs in a straight line between the two openings.

7. Facade panel according to any of the preceding claims,
**characterized**
**in that** the groove (8) runs in the vicinity of the lower edge of the facade panel (1).

8. Facade panel according to any of the preceding claims,
**characterized**
**in that** bores (5), which extend from the front side (6) to the rear side (7) of the facade panel (1), pass through the facade panel (1) in the vicinity of its upper edge.

9. Facade panel according to any of the preceding claims,
**characterized**
**in that** the facade panel (1) has a plate-shaped main body (2) and has, along its upper edge and/or its lower edge, an edge strip (3, 4), which extends along the rear side and is integrally formed on the main body.

10. Facade panel according to Claim 9,
**characterized**
**in that** the groove (8) runs in the corner in which a lower edge strip (4) adjoins the main body (2).

11. Facade panel according to any of the preceding claims,
**characterized**
**in that** the facade panel (1) has a water absorption capacity of at most 6%.

12. Facade panel according to Claim 11,
**characterized**
**in that** the facade panel (1) has a water absorption capacity of at most 3%.

## Revendications

1. Panneau de façade (1),
avec une face avant (6), qui forme, dans la disposition d'utilisation du panneau de façade (1), la face extérieure opposée à un bâtiment de la façade de bâtiment,
une face arrière (7), qui forme, dans la disposition d'utilisation du panneau de façade (1), la face intérieure tournée vers le bâtiment de la façade du bâtiment,
des bords, qui forment, dans la disposition d'utilisation du panneau de façade (1), un bord supérieur et un bord inférieur et deux bords latéraux,
et avec une rainure (8),
qui s'étend d'un bord latéral à l'autre sur la face arrière (7) du panneau de façade (1),
est ouvert depuis la face arrière (7),
et se destine à recevoir une conduite de fluides caloporteurs (9),
**caractérisé en ce**
**que** le panneau de façade (1) est constitué d'un matériau minéral et est configuré sous la forme d'un panneau de façade céramique (1) en clinker.

2. Panneau de façade selon la revendication 1,
**caractérisé en ce**
**que** la rainure (8) s'étend dans un bourrelet, dans lequel le panneau de façade (1) forme une zone avec une épaisseur de paroi augmentée.

3. Panneau de façade selon la revendication 1 ou 2, **caractérisé en ce**
**que** la rainure (8) comporte une section transversale en partie circulaire.

4. Panneau de façade selon la revendication 2, **caractérisé en ce**
**que** la section transversale en partie circulaire forme un angle supérieur à 180°.

5. Panneau de façade selon l'une des revendications précédentes,
**caractérisé en ce**
**que** la rainure (8) débouche sur deux bords latéraux du panneau de façade (1) à la même hauteur.

6. Panneau de façade selon la revendication 5,
**caractérisé en ce**
**que** la rainure (8) s'étend de manière rectiligne entre les deux embouchures.

7. Panneau de façade selon l'une des revendications précédentes,
**caractérisé en ce**
**que** la rainure (8) s'étend à proximité du bord inférieur du panneau de façade (1).

8. Panneau de façade selon l'une des revendications précédentes,
**caractérisé en ce**
**que** le panneau de façade (1) est traversé, à proximité de son bord supérieur, par des alésages (5), qui s'étendent depuis la face avant (6) vers la face arrière (7) du panneau de façade (1).

9. Panneau de façade selon l'une des revendications précédentes,
**caractérisé en ce**
**que** le panneau de façade (1) comporte un corps principal (2) en forme de panneau et comporte, le long de son bord supérieur et/ou de son bord inférieur, un rebord (3, 4) s'étendant le long de la face arrière et formée sur le corps principal.

10. Panneau de façade selon la revendication 9,
**caractérisé en ce**
**que** la rainure (8) s'étend selon l'angle où un rebord inférieur (4) se raccorde au corps principal (2).

11. Panneau de façade selon l'une des revendications précédentes,
**caractérisé en ce**
**que** le panneau de façade (1) présente une capacité d'absorption d'eau de 6 % au maximum.

12. Panneau de façade selon la revendication 11,
**caractérisé en ce**
**que** le panneau de façade (1) présente une capacité d'absorption d'eau de 3 % au maximum.
